# EUROPEAN PATENT APPLICATION

(11) **EP 3 895 952 A1**
(43) Date of publication of application: **20.10.2021**
(21) Application number: 19895380.4
(22) Date of filing: 28.11.2019
(51) Int. Cl.: B61D 17/02

(54) **RAILWAY VEHICLE AND VEHICLE END WINDSHIELD MECHANISM THEREFOR**

(30) Priority: 10.12.2018 CN 201811504108; 10.12.2018 CN 201822079254 U
(71) Applicant: CRRC Changchun Railway Vehicles Co., Ltd., Changchun, Jilin 130000 (CN)
(72) Inventor: LIU, Qingbo, Jilin 130000 (CN); WANG, Lei, Jilin 130000 (CN); SUN, Guangqi, Jilin 130000 (CN)
(74) Representative: Sharman, Thomas Alexander
(86) International application number: PCT/CN2019/121490
(87) International publication number: WO 2020/119465

(57) **Abstract**

Disclosed are a railway vehicle and a vehicle end windshield structure therefor. The vehicle end windshield structure comprising an inner windshield (1) and an outer windshield (2) arranged at the vehicle end, the outer windshield (2) is of a sealing structure, a mounting frame of the inner windshield (1) is provided with an air passing port, and the air passing port is used for enabling a cavity defined between the outer windshield (2) and the inner windshield (1) to communicate with the in-vehicle environment. According to the railway vehicle and the vehicle end windshield structure therefor, the air passing port formed in the mounting frame of the inner windshield is used for enabling the cavity defined between the outer windshield (2) and the inner windshield (1) to communicate with the in-vehicle environment, so that when the vehicle is in high-speed operation and pressure fluctuation occurs in the cavity defined between the outer windshield (2) and the inner windshield (1), the pressure fluctuation can be timely transmitted, and damage to the outer windshield (2) is avoided; and meanwhile, the outer windshield (2) uses a sealing structure, so that interference of an air flowing field outside the vehicle to an air flowing field between the inner windshield (1) and the outer windshield (2) is reduced, thereby avoiding the situation that the inner windshield (1) shakes when the vehicle is in high-speed operation, affecting the travelling comfort of a passenger.

## Description

The present application claims the benefit of priorities to the following two Chinese patent applications, the entire disclosures of which are incorporated herein by reference,
1) Chinese Patent Application No. 201811504108.9, titled "RAILWAY VEHICLE AND VEHICLE END DIAPHRAGM MECHANISM THEREFOR", filed with the China National Intellectual Property Administration on December 10, 2018; and
2) Chinese Patent Application No. 201822079254.3, titled "RAILWAY VEHICLE AND VEHICLE END DIAPHRAGM MECHANISM THEREFOR", filed with the China National Intellectual Property Administration on December 10, 2018.

### FIELD

The present application relates to the technical field of railway traffic, and in particular to a railway vehicle and a vehicle end diaphragm mechanism for the railway vehicle.

### BACKGROUND

In order to consider aerodynamic performance and reduce air resistance during running, high-speed multiple-units are provided with corresponding external diaphragm structures at vehicle ends. At present, the design method for the vehicle end of the high-speed multiple-unit is that an outer diaphragm is of a rubber compression non-sealed structure and an inner diaphragm is of a sealed bellows structure. With this design structure, when the vehicle runs at high speed, the air resistance is large, the surface of the diaphragm is subjected to pressure loads, and there is a pressure difference from the inside to the outside on the inner side of the outer diaphragm. The pressure difference increases when the vehicle speed increases. When the speed reaches a certain level, the pressure difference causes the outer diaphragm column at the vehicle body joint to turn out, which may cause damage to the outer diaphragm. Besides, due to the effect of the air flow field, the inner diaphragm of the vehicle jiggles when the vehicle runs at high speed, which affects the comfort of passengers.

In summary, those skilled in the art have a strong desire to solve the problem that the outer diaphragm is prone to damage and the inner diaphragm is prone to jiggle in the vehicle end diaphragm of the railway vehicle.

### SUMMARY

An object of the present application is to provide a railway vehicle and a vehicle end diaphragm mechanism thereof, so as to solve the problem that the outer diaphragm is prone to damage and the inner diaphragm is prone to jiggle in the vehicle end diaphragm of the railway vehicle.

In order to achieve the above object, a vehicle end diaphragm mechanism for a railway vehicle is provided according to the present application, which includes an inner diaphragm and an outer diaphragm provided at the vehicle end. The outer diaphragm has a sealed structure. An air passage port is provided in a mounting frame of the inner diaphragm, and the air passage port is configured to communicate a cavity enclosed between the outer diaphragm and the inner diaphragm with the vehicle interior environment.

Preferably, an air conditioner corresponding to the position of the air passage port is further provided on a surface of the inner diaphragm corresponding to the interior of the vehicle.

Preferably, the air conditioner is a porous sieve plate.

Preferably, a cover plate detachably connected to the inner diaphragm is further provided on the surface, at a position right facing a vent of the air conditioner, of the inner diaphragm corresponding to the interior of the vehicle.

Preferably, the cover plate is fixedly connected with the inner diaphragm by bolts.

Preferably, a noise reduction member is further provided in the air passage port.

Preferably, the air passage port is arranged at a lower corner of the mounting frame of the inner diaphragm.

Compared with the introduction of the background technology, the above-mentioned vehicle end diaphragm mechanism for a railway vehicle includes the inner diaphragm and the outer diaphragm provided at the vehicle end. The outer diaphragm has a sealed structure. The air passage port is provided in the mounting frame of the inner diaphragm, and the air passage port is configured to communicate the cavity enclosed between the outer diaphragm and the inner diaphragm with the vehicle interior environment. According to the above-mentioned vehicle end diaphragm mechanism for a railway vehicle, the cavity between the inner diaphragm and the outer diaphragm is communicated with the vehicle interior environment through the air passage port provided in the mounting frame of the inner diaphragm, and when the vehicle runs at high speed and pressure fluctuations occur in the cavity enclosed by the inner diaphragm and the outer diaphragm, the pressure fluctuations can be transmitted in time, so as to avoid damage to the outer diaphragm. Moreover, since the outer diaphragm is of a sealed structure, the interference of the air flow field outside the vehicle on the air flow field between the inner diaphragm and the outer diaphragm is thereby reduced, thereby avoiding affecting the comfort of passengers caused by jiggle of the inner diaphragm when the vehicle runs at high speed.

Besides, a railway vehicle is further provided according to the present application, which includes the above-mentioned vehicle end diaphragm mechanism according to any one of the above aspects. Since the above-mentioned vehicle end diaphragm mechanism has the above technical effects, the vehicle having the above-mentioned vehicle end diaphragm mechanism also has the same technical effects, which will not be repeated here.

### BRIEF DESCRIPTION OF THE DRAWINGS

Figure 1 is a schematic three-dimensional view showing the structure of a vehicle end diaphragm according to an embodiment of the present application;
Figure 2 is a schematic longitudinal sectional view showing the structure of the vehicle end diaphragm according to an embodiment of the present application;
Figure 3 is a schematic view, viewed in a direction A, of the structure in Figure 2 with a cover plate being opened; and
Figure 4 is a schematic view, viewed in the direction A, of the structure in Figure 2 with the cover plate being closed.

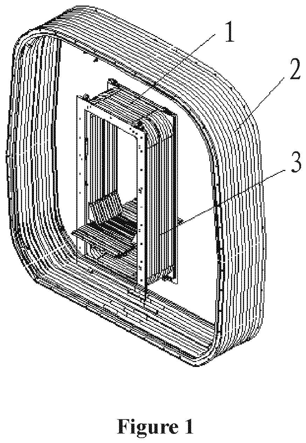

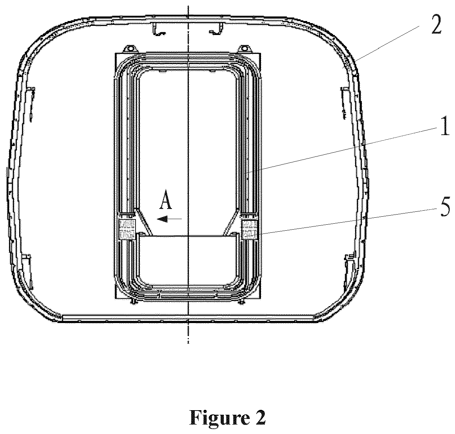

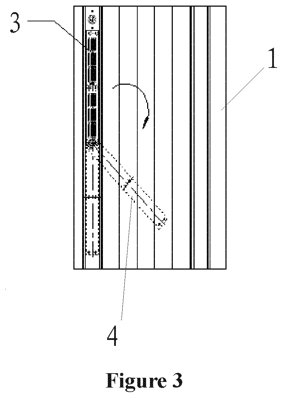

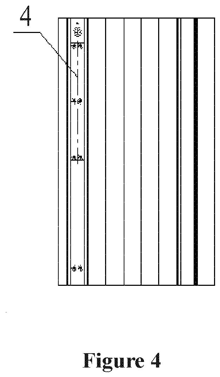

**Reference numerals in Figures 1 to 4 are listed as follows:**

| | |
|---|---|
| 1 inner diaphragm, | 2 outer diaphragm, |
| 3 air conditioner, | 4 cover plate, |
| 5 noise reduction member. | |

### DETAILED DESCRIPTION OF EMBODIMENTS

A core of the present application is to provide a railway vehicle and a vehicle end diaphragm mechanism thereof, so as to solve the problem that the outer diaphragm is prone to damage and the inner diaphragm is prone to jiggle in the vehicle end diaphragm of the railway vehicle.

In order to make the person skilled in the art have a better understanding of the technical solutions according to the present application, the present application is described hereinafter in further detail in conjunction with the drawings and embodiments.

As shown in Figures 1 to 4, a vehicle end diaphragm mechanism for a railway vehicle is provided according to an embodiment of the present application, which includes an inner diaphragm 1 and an outer diaphragm 2 provided at the vehicle end. The outer diaphragm 2 has a sealed structure. An air passage port is provided in a mounting frame of the inner diaphragm 1, and the air passage port is configured to communicate a cavity enclosed between the outer diaphragm 2 and the inner diaphragm 1 with the vehicle interior environment.

According to the above-mentioned vehicle end diaphragm mechanism for a railway vehicle, the cavity between the inner diaphragm and the outer diaphragm is communicated with the vehicle interior environment through the air passage port provided in the mounting frame of the inner diaphragm, and when the vehicle runs at high speed and pressure fluctuations occur in the cavity enclosed by the inner diaphragm and the outer diaphragm, the pressure fluctuations can be transmitted in time, so as to avoid damage to the outer diaphragm. Moreover, since the outer diaphragm is of a sealed structure, the interference of the air flow field outside the vehicle on the air flow field between the inner diaphragm and the outer diaphragm is thereby reduced, thereby avoiding affecting the comfort of passengers caused by jiggle of the inner diaphragm when the vehicle runs at high speed.

In some specific embodiments, an air conditioner 3 corresponding to the position of the air passage port is further provided on a surface of the inner diaphragm 1 corresponding to the interior of the vehicle. For example, the air conditioner 3 may be in the form of a porous sieve plate. While ensuring the normal operation of the air passage port by the arrangement of the air conditioner, the aesthetics of the appearance of the interior of the vehicle can be ensured as much as possible, and the entry of impurities can also be avoided. It should be noted that the structure of the porous sieve plate is only a preferred example of the embodiments of the present application. In actual application, the air conditioner may be of other structures commonly used by those skilled in the art, such as the structure of bellows window.

In some more specific embodiments, a cover plate 4 detachably connected to the inner diaphragm 1 is further provided on the surface, at a position right facing a vent of the air conditioner 3, of the inner diaphragm 1 corresponding to the interior of the vehicle. The vent of the air conditioner 3 can be selectively opened and closed by providing the cover plate 4.

In a further embodiment, the detachable connection between the cover plate 4 and the inner diaphragm 1 is realized by a fixed connection by bolts. It is conceivable that the fixed connection by bolts is only a preferred example of the embodiments of the present application. In actual application, the detachable connection may be of other connection structures commonly used by those skilled in the art, such as clamping engagement.

In a further embodiment, in order to reduce the noise generated by the inner diaphragm as much as possible, a noise reduction member 5 is further provided in the air passage port. It should be noted that the noise reduction member should not affect the normal operation of the air passage port, and the noise reduction member may be made of noise reduction materials commonly used by those skilled in the art.

It should be noted that, generally, the air passage port is provided at a lower corner of the mounting frame of the inner diaphragm 1. This design makes the communication between the air passage port and the vehicle interior environment more convenient to arrange. It is conceivable that, in actual application, the air passage port may be selectively arranged at other positions of the mounting frame of the inner diaphragm according to actual needs.

Besides, a railway vehicle is further provided according to the present application, which includes the above-mentioned vehicle end diaphragm mechanism according to any one of the above aspects. Since the above-mentioned vehicle end diaphragm mechanism has the above technical effects, the vehicle having the above-mentioned vehicle end diaphragm mechanism also has the same technical effects, which will not be repeated here.

The structures of the railway vehicle and the vehicle end diaphragm mechanism thereof according to the present application are described in detail hereinbefore. It should be noted that, the embodiments in this specification are described in a progressive way, each of which emphasizes the differences from others. For the same or similar parts among various embodiments, one may refer to the description of other embodiments.

To be further noted, the term "include", "comprise" or any variant thereof is intended to indicate nonexclusive inclusion so that an article or device including a series of elements includes not only those explicitly described elements but also other elements which have not been listed explicitly or an element(s) inherent to the article or device. Unless explicitly limited otherwise, the statement "comprising (including) a..." does not exclude the case that other similar elements other than the enumerated elements may exist in the article or device.

The principle and the embodiments of the present application are illustrated herein by specific examples. The above description of examples is only intended to help the understanding of the idea of the present application. It should be noted that, for those skilled in the art, various improvements and modifications may be further made to the present application without departing from the principle of the present application, and these improvements and modifications also fall within the protection scope defined by the claims of the present application.

## Claims

1. A vehicle end diaphragm structure for a railway vehicle, comprising an inner diaphragm (1) and an outer diaphragm (2) provided at a vehicle end, wherein the outer diaphragm (2) is of a sealed structure, an air passage port is provided in a mounting frame of the inner diaphragm (1), and the air passage port is configured to communicate a cavity enclosed between the outer diaphragm (2) and the inner diaphragm (1) with vehicle interior environment.

2. The vehicle end diaphragm structure for the railway vehicle according to claim 1, wherein an air conditioner (3) corresponding to a position of the air passage port is further provided on a surface of the inner diaphragm (1) corresponding to an interior of the vehicle.

3. The vehicle end diaphragm structure for the railway vehicle according to claim 2, wherein the air conditioner (3) is a porous sieve plate.

4. The vehicle end diaphragm structure for the railway vehicle according to claim 2 or 3, wherein a cover plate (4) detachably connected to the inner diaphragm (1) is further provided on the surface, at a position right facing a vent of the air conditioner (3), of the inner diaphragm (1) corresponding to the interior of the vehicle.

5. The vehicle end diaphragm structure for the railway vehicle according to claim 4, wherein the cover plate (4) is fixedly connected with the inner diaphragm (1) by bolts.

6. The vehicle end diaphragm structure for the railway vehicle according to claim 1, wherein a noise reduction member (5) is further provided in the air passage port.

7. The vehicle end diaphragm structure for the railway vehicle according to any one of claims 1 to 6, wherein the air passage port is arranged at a lower corner of the mounting frame of the inner diaphragm (1).

8. A railway vehicle, comprising a vehicle end diaphragm structure, wherein the vehicle end diaphragm structure is the vehicle end diaphragm structure according to any one of claims 1 to 7.
